Europäisches Patentamt

European Patent Office

Office européen des brevets

(11) Veröffentlichungsnummer: **0 074 565**

**A2**

(12) EUROPÄISCHE PATENTANMELDUNG

(21) Anmeldenummer: 82108034.8

(22) Anmeldetag: 01.09.82

(51) Int. Cl.³: **B 23 Q 3/10**

(30) Priorität: 14.09.81 DE 3136356

(43) Veröffentlichungstag der Anmeldung:
23.03.83 Patentblatt 83/12

(84) Benannte Vertragsstaaten:
AT CH DE FR GB IT LI SE

(71) Anmelder: Firma Erwin Halder

D-7959 Achstetten 3-Bronnen(DE)

(72) Erfinder: Halder, Werner

D-7959 Achstetten 3-Bronnen(DE)

(74) Vertreter: Braito, Herbert, Dipl.-Ing.
Postfach 1140 Martin-Luther-Strasse 1
D-7950 Biberach 1(DE)

(54) **Palette zum Ausrichten und Aufspannen von Werkstücken.**

(57) Am Rand der quaderförmigen Grundplatte (1) einer Werkstückpalette sind rechtwinklig zueinander stehende Anschlagflächen (2) an Anschlagleisten (3) angebracht. Die Grundplatte ist durch ein Rastersystem aus einander abwechselnden Reihen (11,12) und Zeilen (13,14) unterteilt, wobei Gewindebohrungen (15) nur in den Kreuzungen der Reihen (11) mit den Zeilen (13) und der Reihen (12) mit den Zeilen (14) vorgesehen sind. Bei einer Rasterteilung (t) zwischen den Reihen und Zeilen beträgt der Abstand (a) zwischen benachbarten Gewindebohrungen (15) $\sqrt{2}$ t. Baukörper (4), die eine Auflage für das Werkstück (7) bilden, sind ebenso quaderförmig ausgebildet wie dünnere Abstandskörper (5) und haben eine kleinste Breite b = 2t. Abstandskörper werden jedoch in Längen 2t bis 6t mit Teilungssprung vorrätig gehalten. Die Baukörper (4), die auf ihrer Oberseite mit T-Nuten (19) versehen sind, können verschiedenartige Aufbauten wie beispielsweise einen Anschlagbolzen (6) tragen. Ihr Abstand zu den Anschlagflächen (2) wird in zwei Richtungen durch die Abstandskörper (5, 51, 52) eingestellt. Sie selbst werden lediglich durch eine in ihrer Mitte angebrachte Innensechskantschraube (18) auf der Grundplatte in einer Gewindebohrung (15) festgespannt. Durch Spannvorrichtungen (8), die auf weiteren Baukörpern (41) angebracht sind, läßt sich das Werkstück (7) gegen die Anschlagbolzen (6) und damit über die Baukörper (4) und die Abstandskörper (5, 51) gegen die Anschlagflächen (2) verspannen. Die Herstellungskosten der Grundplatte sind gering, und die Teilung kann sehr fein bemessen werden.

Fig. 1

Firma
Erwin Halder
Maschinen- und Werkzeugfabrik

7959 Achstetten 3-Bronnen


Palette zum Ausrichten und Aufspannen von Werkstücken


Die Erfindung betrifft eine Palette zum Ausrichten und Aufspannen von Werkstücken, insbesondere für die spanabhebende Bearbeitung auf Bearbeitungszentren, mit einer im wesentlichen ebenen Grundplatte, die nach einem Rastersystem angeordnete Befestigungsstellen zum Festspannen und Ausrichtmittel zum Ausrichten von die Lage des Werkstückes bestimmenden Baukörpern, aufweist.

Die mechanisierte und immer stärker automatisierte Herstellung von Werkstücken, vor allem auf einem Bearbeitungszentrum, auf welchem das Werkstück in einer einzigen Aufspannung durch verschiedenartige und aus unterschiedlichen Richtungen angreifende Werkzeuge bearbeitet wird, aber auch der automatische Transport eines Werkstückes von einer Bearbeitungsstation zur anderen macht es notwendig, das Werkstück vorbereitend auf einer Palette aufzuspannen. Dabei wird es durch verschiedenartige Stütz- und Spannsysteme auf einer Grundplatte festgelegt, die dann auf einen Aufnahmetisch der Bearbeitungsmaschine eingespannt wird. Da die reine Bearbeitungszeit ständig kürzer wird und man zudem einen vollautomatischen Betrieb über eine ganze Schicht hinweg anstrebt, muß oft eine größere Anzahl von mit Werkstücken bespannten Paletten in einem Lager bereitgestellt werden.

Mit Grundplatten, die ebenso wie die Maschinentische von Werkzeugmaschinen, mit T-Nuten versehen sind, erreicht man zwar größere Flexibilität beim Aufbau einer Vorrichtung, aber die Kosten der Grundplatte und damit auch die Kosten der Spannvorrichtungen sind entsprechend groß.

Bekannt sind Palettensysteme, deren Grundplatte anstelle von T-Nuten in einem Rastersystem angeordnete Bohrungen mit zylindrischen Stellbuchsen und Spanngewinde für an den Baukörpern anzubringende Schrauben aufweisen. Die Ausrichtung wird dabei durch Eingriff von an den Baukörpern vorgesehenen Bolzen in wenigstens zwei in einer bestimmten Reihe oder Zeile der Rasterbohrungen liegende Buchsen gewährleistet. Bei einem ersten bekannten Bausystem sind alle Raster-Bohrungen mit Paßbuchsen und Gewinde besetzt. Auch dies ist entsprechend teuer, da jede Paßbuchse einmal selbst gehärtet und mit sehr feiner Passung auf Maß geschliffen und zum anderen exakt innerhalb des Rasterfeldes positioniert werden muß.

Bei einem anderen bekannten Palettensystem sind in der Grundplatte Paßbuchsen und Gewindebohrungen innerhalb des Rasterfeldes abwechselnd vorgesehen. Zu einer mittleren Schrauben-Spannstelle benötigt man also zwei in der gleichen Reihe oder Zeile außen vorgesehene Paßbuchsen, um überhaupt einen Baukörper ausrichten und spannen zu können. Der Baukörper muß sich daher über mindestens zwei Rasterteilungen hinweg erstrecken, wobei zudem die Einspannung längerer*Baukörper mit einer einzigen mittleren Spannschraube unzureichend sein kann.                    * dünner

Wenn auch die mit Spannbohrungen versehenen Grundplatten zum Unterschied von den T-Nuten-Grundplatten nicht gehärtet sein müssen und sich daher ohne weiteres auch mit unterschiedlichen Abmessungen auf Vorrat halten lassen, so ist doch und gerade wegen der teuren Paßbuchsensysteme ein verhältnismäßig grobes Rastermaß gewählt, das beim Einspannen eines Werkstückes große Spannwege erfordert, was wiederum die Spannmittel ebenso verteuert wie es die Rüstzeiten verlängert.

Die Erfindung geht aus von der eingangs geschilderten Palettenausführung und verfolgt die Aufgabe, diese bekannte Palette so weiterzubilden, daß mit geringeren Kosten eine feine Rasterung ermöglicht wird.

Zur Lösung dieser Aufgabe dienen erfindungsgemäß wenigstens zwei hochragende und längs zweier im Winkel zueinander stehender Seitenflächen der Grundplatte verlaufende Anschlagflächen und zwischen diesen und den Baukörpern einzufügende Abstandskörper.

Zum Unterschied von den bekannten gelochten Grundplatten wird hier die Ausrichtung nicht von den Rasterpunkten, sondern vom Rand der Grundplatte abgeleitet. Damit dienen die Rasterpunkte ausschließlich als Befestigungsstellen, die keineswegs auch nur annähernd so exakt auszurichten sind wie die dort bisher verwendeten Paßbuchsen. Man muß also lediglich im "ungefähren" Rastersystem Gewindebohrungen anbringen, um dort die Baukörper nach der auf andere Weise vorzunehmenden Ausrichtung festspannen zu können. Im Verhältnis zu den Gesamtkosten einer Palette treten die Kosten zum Anbringen der Bohrungen in den Rasterstellen kaum in Erscheinung. Die Anzahl der anzubringenden Bohrungen ist dann im Prinzip nur noch begrenzt durch die Formsteifheit der Grundplatte, d.h. man kann die Rasterung wesentlich kleiner halten als bei den bisher bekannten Palettensystemen. Damit kann auch die Grundfläche der Baukörper verkleinert werden, da sie im Prinzip nur eine einzige Befestigungsstelle in einem Rasterpunkt überdecken müssen, im übrigen aber in der Ebene der Auflagefläche gegen zwei Anschlagflächen abzustützen sind. Die Genauigkeit der Ausrichtung liegt dann ausschließlich in der äußeren Abstützung, also von den Anschlagflächen ausgehend in den Außenflächen der Abstandskörper und der Baukörper. Es können auch mehrere Bau - körper hintereinander über Abstandskörper an einer gemeinsamen Anschlagfläche abgestützt werden, in der Regel arbeitet man jedoch mit drei Anschlagflächen, gegen welche dann in der Ebene der Grundplatte in bekannter Weise verspannt wird. Den dazu anzusetzenden Spannelementen kommt vornehmlich die verfeinerte Rasterung zustatten.

Vorzugsweise sind Baukörper und Abstandskörper als Quader mit sich in das Rastersystem einfügenden Seitenlängen ausgebildet. Auf diese Weise wird sichergestellt, daß die Abstützung ausschließlich an ebenen und von der Grundplatte senkrecht hochragenden Flächen erfolgt, man die einzelnen Körper preiswert und genau durch Flachschleifen ihrer Seitenflächen herstellen kann und Anlageflächen in einer bestimmten vorgegebenen Breite geboten werden. Auch die kleinsten Baukörper lassen sich somit in ihrer Postion und Drehstellung zuverlässig gesichert durch lediglich in Längenänderungen einer Rasterteilung vorrätig gehaltene Abstandskörper zuverlässig festgespannt auf der Grundplatte halten.

Vorzugsweise sind die durch Gewindebohrungen bestimmten benachbarten Rasterpunkte um 45° zu den Reihen und Zeilen der Rasterpunkte versetzt angeordnet. Dadurch kann es zwar notwendig werden, daß man aus einer bestimmten Reihe oder Zeile in eine benachbarte überwechseln muß, aber die Teilung beträgt dann nur $\sqrt{2}$ des Abstandes zwischen den einzelnen Bohrungen, läßt sich also bei gleicher Schwächung der Platte wesentlich feiner halten als bei der bisher üblichen Bohrungsanordnung.

Die Baukörper und Anschlagkörper sollten eine kleinste Seitenlänge mit doppelter Rasterteilung und in dem mittleren bzw. mehreren inneren Rasterpunkten Durchbrechungen zur Aufnahme einer Spannschraube aufweisen. Soweit die Baukörper nur eine Stützfunktion an ihrer Oberfläche ausüben, ist lediglich diese zur Grundfläche exakt zu bearbeiten. Die Baukörper können jedoch in bekannter Weise mit Winkelflächen und dgl., insbesondere mit Kupplungsmitteln zum Ankuppeln von Aufsetzkörpern und/oder Ansetzkörpern versehen sein.

Nach einer besonderen Ausführungsform der Erfindung weisen die Baukörper an ihrer Oberseite wenigstens eine, insbesondere zwei in einem Rasterpunkt sich kreuzende T-Nuten auf. Auf diese Weise lassen sich Aufbau- und Ansetzelemente verwenden, wie sie aus dem ausschließlich auf T-Nuten-Spannung ausgerichteten Palettensystem bekannt und leicht verfügbar sind.

Die Anschlagflächen können im Prinzip einstückig an die Grundplatte angeformt werden, sofern diese aus entsprechend hartem, formbeständigem und verschleißfestem Werkstoff besteht. Ggf. können auch die einstückig angeformten Anschlagflächen eine örtliche Aushärtung erfahren oder mit einer verschleißfesten und formbeständigen Oberflächenschicht überzogen werden. Einfacher ist es jedoch, die Anschlagflächen an gesonderten Anschlagleisten anzubringen, die dann am Rand der Grundplatte befestigt werden. Dabei kann die Grundplatte aus relativ weichem Werkstoff bestehen und preiswert hergestellt werden, während die Anschlagleisten gehärtet und nachgeschliffen sind, so daß sich die Ausrichtgenauigkeit nach zahlreichen Rüstvorgängen nicht ändert. Zudem wird bei gesonderter Ausführung vermieden, daß am Rand der Grundplatte über deren Oberseite hinaus feste Vorsprünge vorhanden sind, die das exakte Maßschleifen dieser Oberfläche erschweren würden. Im Prinzip können natürlich die Anschlagleisten verschiedenartigen Querschnitt haben, bevorzugt wird jedoch die Quaderform bzw. der Rechteck-Vollquerschnitt, da sich dann einmal beim Härten die geringsten Verzugserscheinungen ergeben und das Schleifen vereinfacht wird.

Anstatt nun die Anschlagleisten am Rand der Grundplatte von außen anzuschrauben, wird man sie zweckmäßigerweise in am Rand der Grundplatte eingeformten Nuten einlassen. Dadurch werden zwar die Außenabmessungen der Grundplatte etwas vergrößert, aber die Anschlagleisten sind formschlüssig am Nutrand unmittelbar an der Grundplatte abgestützt, und die Spannkräfte müssen nicht über durch Zugkräfte belastete Schrauben gelenkt werden.

Die Zeichnung gibt die Erfindung beispielsweise wieder. Es zeigen

Fig. 1  eine Ansicht einer erfindungsgemäßen Palette von oben,

Fig. 2  eine Ansicht dieser teilweise geschnittenen Palette von unten in Fig. 1 gesehen,

Fig. 3  die Ansicht einer abgewandelten Grundplatte entsprechend Fig. 1 von oben gesehen,

Fig. 4  eine Ansicht dieser Grundplatte von unten in Fig. 3 gesehen,

Fig. 5  eine vergrößerte Teilansicht der Grundplatte nach den Fig. 3 und 4 mit einer mehrteiligen Stützkonstruktion und

Fig. 6  einen Schnitt durch diese Konstruktion nach der Linie VI-VI in Fig. 5.

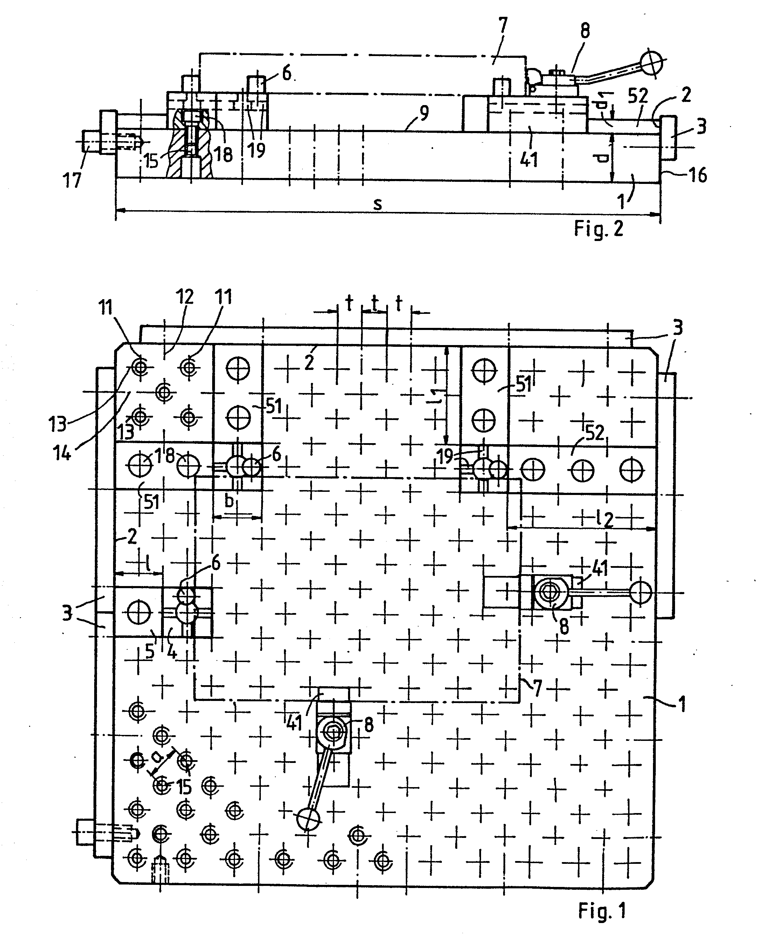

Nach den Fig. 1 und 2 sind am Rand einer quaderförmigen Grundplatte 1 Anschlagleisten 3 mit Anschlagflächen 2 angebracht. Drei erste Baukörper 4 sind durch Abstandskörper 5 bzw. 51,52 an den Anlageflächen 2 abgestützt und tragen zylindrische Anschlagbolzen 6.

Ein Werkstück 7 liegt auf den drei Baukörpern 4 auf und mit einer Seitenkante an den Anschlagbolzen 6 an, ist also zu den rechtwinklig zueinander stehenden Anschlagflächen 2 eindeutig definiert. An den freien Seitenkanten des Werkstückes 7 greifen Exzenter-Spannvorrichtungen 8 an, die auf weiteren Baukörpern 41 aufgebaut sind, deren vorspringende Zungen 42, 43 das Werkstück 7 zusätzlich unterstützen können.

Die Grundplatte 1 der gezeigten Palette besteht aus einem verhältnismäßig harten und verschleißfesten, vor allem aber formbeständigen Werkstoff wie Schmiedestahl oder auch Stahlguß. Sie ist exakt quaderförmig ausgebildet und allseitig auf ein vorgegebenes Maß sehr geringer Toleranz bearbeitet. Abweichend von der gezeigten Voll-Quaderform kann auch bei verringerter Palettendicke ein nach unten ragender Randflansch mit ggf. zwischen den Randflanschen eingezogenen Kreuzrippen vorgesehen sein. Die Grundplatte wird zweckmäßigerweise quadratisch ausgeführt, kann aber verschiedene Seitenlängen s haben und für den einen oder anderen Zweck auch rechteckförmig gestaltet sein.

Die als Aufstellfläche für die Baukörper 4 dienende Oberseite 9 der Grundplatte ist durch ein Rastersystem mit einander abwechselnden Reihen 11,12 und Zeilen 13,14 in der Rasterteilung t unterteilt. Dabei sind Gewindebohrungen 15 nur in den Kreuzungen der Reihen 11 mit den Zeilen 13 und der Reihen 12 mit den Zeilen 14 vorgesehen. Der Abstand a zwischen benachbarten Bohrungen 15 beträgt damit $\sqrt{2}$ t und ist um ca. 40% größer als die verfügbare Teilung t. Die Gewindebohrungen 15 sind in bekannter Weise nach unten erweitert.

Die Baukörper 4 haben quadratische Grundflächen mit der Breite b = 2t. Auch der Abstandsköper 5 ist quadratisch mit der gleichen Seitenlänge l = b = 2t ausgeführt. Die anderen Abstandskörper haben zwar wiederum die gleiche Breite b, aber nach der Rasterteilung gestaffelte Längen. So ist die Länge l1 des Abstandskörpers 51 = 4t, die Länge l2 des Abstandskörpers 52 = 6t. Während die Baukörper 4 größere Höhe haben können, sind die Abstandskörper 5,51,52 durchweg als Platten ausgebildet.

Die Anschlagleisten 3 haben rechteckigen Querschnitt mit einem Seitenverhältnis von etwa 3 : 1. Sie sind mit weniger als der halben Seitenlänge s der Grundplatte ausgeführt, so daß nach Bedarf eine oder mehrere Anschlagleisten an einer Seitenfläche 16 angesetzt werden können. Diese Anschlagleisten bestehen aus gehärtetem Stahl, sie sind geschliffen und durch Schrauben 17 von außen an die Seitenflächen 16 der Grundplatte angeschraubt.

Bei der derzeit bevorzugten Teilung t = 35 mm erreichte die Breite b als Anlagelänge an beiden Enden der Abstandskörper 51 eine Größe von 70 mm. Die Baukörper 4 können also sehr exakt durch Andrücken über die Abstandskörper 51 gegen die Anschlagflächen 2 positioniert werden und lassen sich dann durch eine in ihrer Mitte angebrachte und in eine Gewindebohrung 15 einzuschraubende Innensechskantschraube 18 positions- und lagerecht auf der Grundplatte festschrauben. Auf die gleiche Weise sind auch die Abstandskörper 5,51,52 festgelegt, wobei die Innensechskantschrauben 18 jeweils in einem Rasterpunkt des von der Grundplatte zu übertragenden Rastersystems angeordnet werden können. Auch die Ränder der Stütz- oder Abstandskörper kommen auf die vorgegebenen Reihen und Zeilen zu liegen.

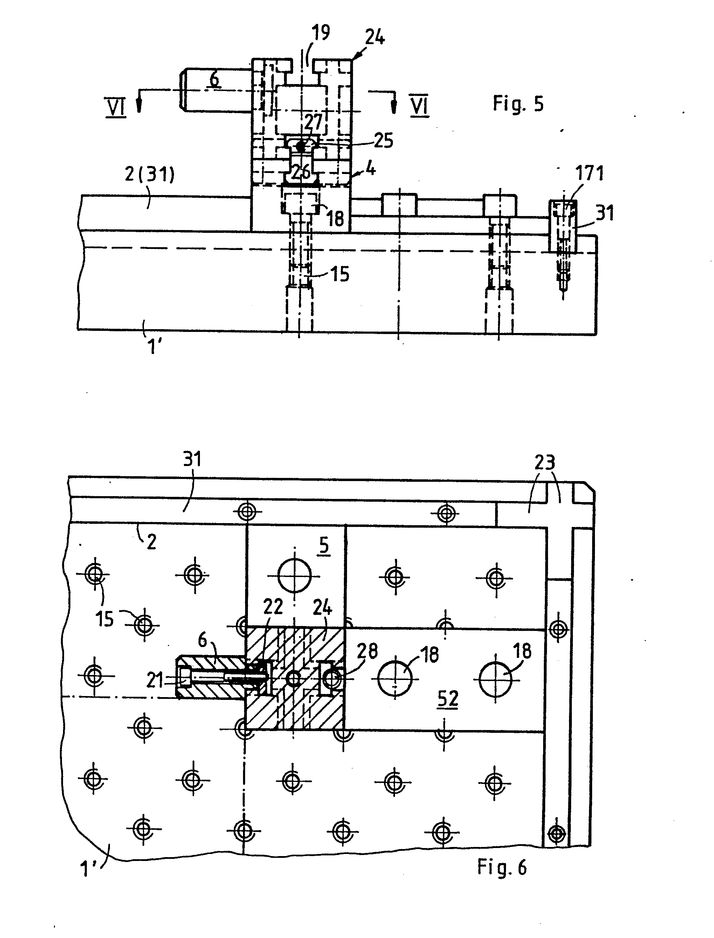

Das Werkstück 7 kann grundsätzlich in der dargestellten Weise auf die Oberseite der Baukörper 4 aufgelegt, aber auch an deren Seitenflächen ausgerichtet werden. Hier dienen zur seitlichen Ausrichtung von den Baukörpern hochragenden Anschlagbolzen 6, die in der aus Fig. 6 ersichtlichen Weise in einer der auf der Oberseite der Baukörper einander kreuzenden T-Nuten 19 mittels einer Innenkantschraube 21 und einer Vierkantmutter 22 eingepannt sind.

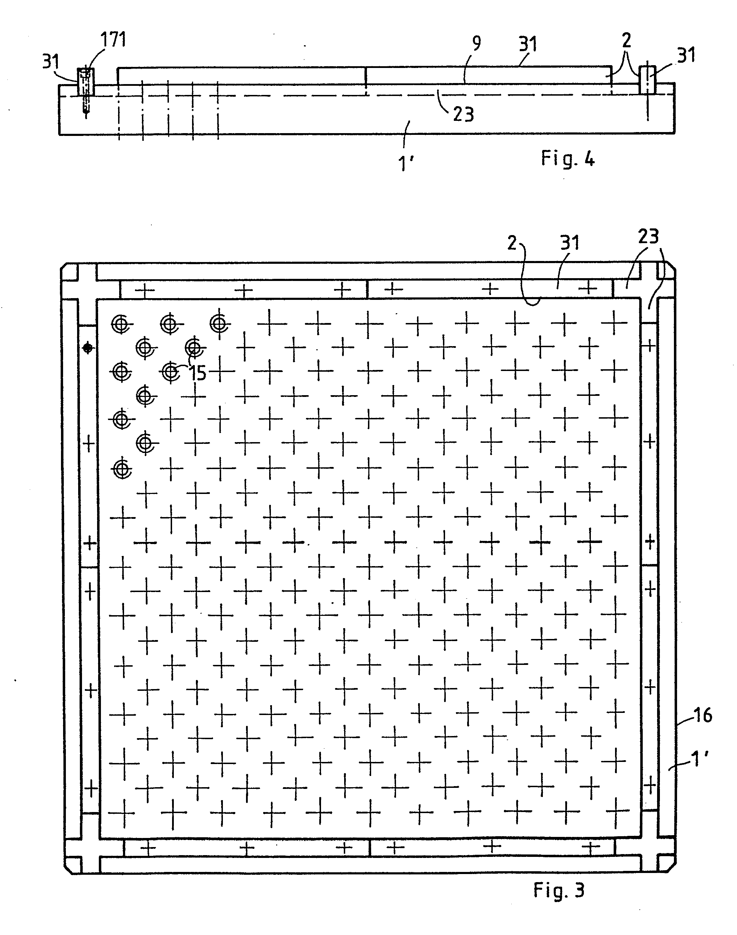

Bei der in den Fig. 3 und 4 gezeigten Grundplatte 1' sind mit geringem Abstand von den Seitenflächen 16 zu diesen parallel Rechtecknuten 23 von oben eingefräst, und die Anschlagleisten 31 sind unmittelbar in diese Nuten eingesetzt und durch von oben eingebrachte Innenkantschrauben 171 auf der Grundplatte befestigt. Dadurch werden die von innen wirkenden Anlagekräfte formschlüssig auf die Nutwandung übertragen, was die Ausrichtgenauigkeit verbessert. Zudem ist hier das Seitenverhältnis des Querschnittes der Anschlagleiste verkleinert, was die Gefahr eines Verziehens beim Härten mindert.

Die Fig. 5 und 6 lassen am Beispiel eines bekannten kubusförmigen Anschlußsteines 24 erkennen, wie von einem Baukörper 4 aus weitergebaut werden kann.

Der Anschlußstein 24 ist allseitig mit T-Nuten 19 besetzt. Er kann also als säulenartiger Aufbau dadurch auf dem Baukörper 4 aufgespannt werden, daß man zwei T-Nuten 19 einander überdecken läßt und dann dort eingebrachte T-Nutensteine mit Passhals 25,26 durch eine Schraube 27 oder 28 gegeneinander verspannt. Anstelle eines kubusförmigen Anschlußteiles kann man auch einen säulenartig langgestreckten Quader vorsehen oder mehrere Anbauteile aufeinandersetzen oder zur Seite anfügen, wie dies hier mit dem Anschlagbolzen 6 geschehen ist.

Firma
Erwin Halder
Maschinen- und Werkzeugfabrik

7959 Achstetten 3-Bronnen

Palette zum Ausrichten und
Aufspannen von Werkstücken

Ansprüche

1. Palette zum Ausrichten und Aufspannen von Werkstücken, insbesondere für die spanabhebende Bearbeitung auf Bearbeitungszentren, mit einer im wesentlichen ebenen Grundplatte, die nach einem Rastersystem angeordnete Befestigungsstellen zum Festspannen und Ausrichtmittel zum Ausrichten von die Lage des Werkstückes bestimmenden Baukörpern aufweist, gekennzeichnet durch wenigstens zwei hochragende und längs zweier im Winkel zueinander stehender Seitenflächen (16) der Grundplatte (1,1') verlaufende Anschlagflächen (2) und zwischen diesen und den Baukörpern (4) einzufügende Abstandskörper (5, 51, 52).

2. Palette nach Anspruch 1, dadurch gekennzeichnet, daß Baukörper (4) und Abstandskörper (5, 51, 52) als Quader mit sich in das Rastersystem einfügenden Seitenlängen (b,l), insbesondere wenigstens der doppelten Rasterteilung (t) ausgebildet sind.

3. Palette nach Anspruch 1 oder 2, dadurch gekennzeichnet, daß die durch Gewindebohrungen (15) bestimmten benachbarten Rasterpunkte um 45° zu den Reihen und Zeilen (11,12, 13,14) versetzt sind.

4. Palette nach Anspruch 1, 2 oder 3, dadurch gekennzeichnet, daß die Baukörper (4) und Anschlagkörper (5, 51 52) eine kleinste Seitenlänge (b) mit doppelter Rasterteilung (t) und in dem mittleren bzw. mehreren inneren Rasterpunkten Durchbrechungen zur Aufnahme einer Spannschraube (18) aufweisen.

5. Palette nach Anspruch 4, dadurch gekennzeichnet, daß die Baukörper (4) mit Kupplungsmitteln zum Ankuppeln von Aufsetzkörpern und/oder Ansetzkörpern (24) versehen sind.

6. Palette nach Anspruch 5, dadurch gekennzeichnet, daß die Baukörper (4) an ihrer Oberseite wenigstens eine, insbesondere zwei in einem Rasterpunkt kreuzende T-Nuten aufweisen.

7. Palette nach einem der Ansprüche 1 bis 6, dadurch gekennzeichnet, daß die Anschlagflächen (2) an am Rand der Grundplatte (1,1') befestigten, insbesondere quaderförmigen Anschlagleisten (3,31) angebracht sind.

8. Palette nach Anspruch 7, dadurch gekennzeichnet, daß die Anschlagleisten (31) in am Rand der Grundplatte (1') eingeformte Nuten (23) eingelassen sind.

0074565

1/3

Fig. 2

Fig. 1

0074565

Fig. 4

Fig. 3

Fig. 5

Fig. 6